## Europäisches Patentamt

## European Patent Office

## Office européen des brevets

(19)

(11) Veröffentlichungsnummer: **0 064 489**
**B1**

(12) ## EUROPÄISCHE PATENTSCHRIFT

(45) Veröffentlichungstag der Patentschrift:
11.07.84

(51) Int. Cl.³: **C 04 B 7/44**, F 27 B 7/20

(21) Anmeldenummer: **82890027.4**

(22) Anmeldetag: **23.02.82**

(54) **Verfahren zum Kalzinieren von Rohmehl, insbesondere für die Zementherstellung.**

(30) Priorität: **06.05.81 AT 1997/81**

(43) Veröffentlichungstag der Anmeldung:
**10.11.82 Patentblatt 82/45**

(45) Bekanntmachung des Hinweises auf die Patenterteilung:
**11.07.84 Patentblatt 84/28**

(84) Benannte Vertragsstaaten:
**CH DE FR GB IT LI LU SE**

(56) Entgegenhaltungen:
**DE - A - 2 724 654**

**IEEE TRANSACTIONS ON INDUSTRY APPLICATIONS,**
Band 1A-11, Nr. 6, November /Dezember 1975, Seiten
688-694 S. MORI et al.: "Reinforced suspension
preheater (RSP) process of cement manufacture -
suspension preheater with special furnace for boosting
calcination of raw meal"

(73) Patentinhaber: **VOEST-ALPINE Aktiengesellschaft,
Werksgelände, A-4010 Linz (AT)**

(72) Erfinder: **Krennbauer, Franz, Marcusweg 5, A-4020 Linz
(AT)**

(74) Vertreter: **Hübscher, Gerhard, Dipl.-Ing. et al,
Patentanwälte Dipl.-Ing. Gerhard Hübscher Dipl.-Ing.
Helmut Hübscher Dipl.-Ing. Heiner Hübscher
Spittelwiese 7, A-4020 Linz (AT)**

## Beschreibung

Die Erfindung bezieht sich auf ein Verfahren zum Kalzinieren von Rohmehl, insbesondere für die Zementherstellung, bei dem das Rohmehl nach einer Vorwärmung unter Wärmezufuhr in wenigstens zwei Stufen kalziniert wird, bevor es in einem Ofen gebrannt wird.

Um den Wärmebedarf beim Kalzinieren von Rohmehl weitgehend aus dem Wärmeangebot des Brennprozesses decken zu können, wird das Rohmehl üblicherweise in einem Kalzinator entsäuert, der an den Abgasstrom des Brennofens bzw. an den Abluftstrom eines dem Ofen nachgeschalteten Kühlers angeschlossen ist, was den zusätzlichen Brennstoffbedarf herabsetzt. Trotzdem ist ein grösserer Brennstoffeinsatz als theoretisch ableitbar erforderlich, weil bei den bekannten Kalzinatoren kaum die Abhängigkeit der Reaktionszeit von der Korngrösse berücksichtigt werden kann. Wie Untersuchungen gezeigt haben, sinkt die für die Kalzinierung benötigte Reaktionszeit mit einer zunehmenden Rohmehltemperatur und mit abnehmender Korngrösse. Es werden folglich Wärmemengen entsprechend der im Rohmehl vorkommenden gröbsten Korngrösse zugeführt werden müssen, um eine vollständige Entsäuerung auch des groben Kornanteiles sicherzustellen. Der feinkörnigere Rohmehlanteil benötigt aber diese Wärmemengen nicht, woraus der Unterschied zwischen dem theoretischen Wärmebedarf und der tatsächlich erforderlichen Brennstoffmenge resultiert. Mit der grösseren Brennstoffmenge ist aber auch eine höhere Abgastemperatur und damit ein schlechterer thermischer Wirkungsgrad verbunden.

Damit der zum Kalzinieren benötigte Brennstoff besser ausgenützt werden kann, ist es bekannt (DE-A-27 24 654), die Kalzinierung des vorgewärmten Rohmehls in wenigstens zwei Stufen durchzuführen und das Rohmehl jeweils aus dem Abgasstrom der vorhergehenden Kalzinierstufe abzuscheiden, bevor es der nachfolgenden Kalzinierstufe aufgegeben wird. Dadurch wird zwar erreicht, dass die in jeder Kalzinierstufe zugefügte, nur einen Teil des gesamten Brennstoffbedarfes ausmachende Brennstoffmenge mit dem Rohmehl gut vermischt und verbrannt wird, wobei sich eine durch den Wärmeaustausch bei der Rohmehlbewegung während des Abscheidevorganges unterstützte Vergleichmässigung der Rohmehltemperatur ergibt, die eine örtliche Überhitzung des Rohmehls weitgehend verhindert, doch wird auch bei diesem bekannten Verfahren dem Grobkornanteil und dem Feinkornanteil des Rohmehls die gleiche Wärmemenge bei gleicher Reaktionszeit zugeführt, so dass ein erhöhter Brennstoffeinsatz notwendig ist.

Der Erfindung liegt somit die Aufgabe zugrunde, ein Verfahren zum Kalzinieren von Rohmehl anzugeben, bei dem der für das Kalzinieren des Rohmehls erforderliche, zusätzliche Brennstoffbedarf in Angleichung an die theoretisch benötigte Wärmemenge in Abhängigkeit vom jeweiligen Anteil der verschiedenen Korngrössen des Rohmehls gewählt werden kann.

Die Erfindung löst die gestellte Aufgabe dadurch, dass nach der in Richtung des Rohmehlstromes ersten Kalzinierstufe vor jeder in Richtung des Rohmehlstromes folgenden Stufe ein jeweils feinkörnigerer Anteil des Rohmehls aus dem Rohmehlstrom abgeschieden und dem Ofen zugeführt wird.

Durch das Abscheiden des jeweils feinkörnigeren Rohmehlanteiles nach jeder Kalzinierstufe braucht jeder Kalzinierstufe nur jene Wärmemenge zugeführt zu werden, die notwendig ist, um den feinkörnigeren Anteil des Rohmehls zu entsäuern. Der für eine Kalzinierung der grobkörnigeren Rohmehlanteile nötige, zusätzliche Brennstoff wird in den jeweils nachfolgenden Kalzinierstufen zugeführt, vor denen der bereits kalzinierte feinkörnigere Rohmehlanteil ausgeschieden und dem Ofen zugeführt wurde. Der feinkörnigere Rohmehlanteil wird folglich nicht in unnötiger Weise mit dem Grobkornanteil erhitzt, so dass ein Angleichen des tatsächlichen Brennstoffeinsatzes an die theoretisch benötigte Wärmemenge sichergestellt wird. Damit sinkt bei gleicher Kalzinierleistung der Brennstoffbedarf. Darüber hinaus stellt sich eine niedrigere Abgastemperatur und damit ein höherer thermischer Wirkungsgrad ein.

Ausgehend von einer Vorrichtung, die aus einem Kalzinator einem im Abgasstrom aus dem Kalzinator angeordneten, mit einem Ofen verbundenen Abscheider für das kalzinierte Rohmehl und aus einem mit den Abgasen aus dem Kalzinator bzw. aus dem Ofen beheizten, mehrstufigen Wärmetauscher für das Rohmehl besteht, wobei der Kalzinator wenigstens zwei durch einem Rohmehlabscheider miteinander verbundene Kalziniereinheiten aufweist, wird zur Durchführung des Verfahrens vorgeschlagen, dass der Rohmehlabscheider zwischen den Kalziniereinheiten als Grobkornabscheider ausgebildet ist, dessen Austragungsleitung mit der bezüglich des Rohmehlstromes nachgeordneten Kalziniereinheit und dessen Abgasaustrittsleitung mit einem an den Ofen angeschlossenen Feinkornabscheider verbunden sind.

Durch den Grobkornabscheider wird das aus der ersten Kalziniereinheit kommende Rohmehl in Abhängigkeit von der Korngrösse in zwei Teilströme aufgeteilt, und zwar in einen Feinkornanteil und einen Grobkornanteil, wobei als Fein- und Grobkorn die feineren und gröberen Korngrössen der jeweils vorkommenden Korngrössenverteilungen verstanden werden. Der Feinkornanteil, der bereits vollständig entsäuert ist, wird über die Gasaustrittsleitung des Grobkornabscheiders einem Feinkornabscheider zugeführt, in dem das feinkörnige Rohmehl aus dem Trägergasstrom abgeschieden und zum Brennen dem Ofen zugeleitet wird. Über die Austragungsleitung des Grobkornabscheiders wird das grobkörnigere Rohmehl einer zweiten Kalziniereinheit zur Vervollständigung des Kalziniervorganges aufgegeben. Je nach der Korngrössenverteilung können zwei oder mehrere Kalziniereinheiten mit einer Zwischenabscheidung eines Teilstromes an bereits kalziniertem Rohmehl vorgesehen werden.

In der Zeichnung ist eine erfindungsgemässe Vorrichtung zur Durchführung des Verfahrens beispielsweise dargestellt. Es zeigen

Fig. 1 eine Anlage zum Herstellen von Zement mit einer erfindungsgemässen Vorrichtung zum Kalzinieren des Rohmehls in einem schematischen Blockschaltbild und

Fig. 2 eine Konstruktionsvariante einer Kalziniervorrichtung, ebenfalls im Blockschaltbild.

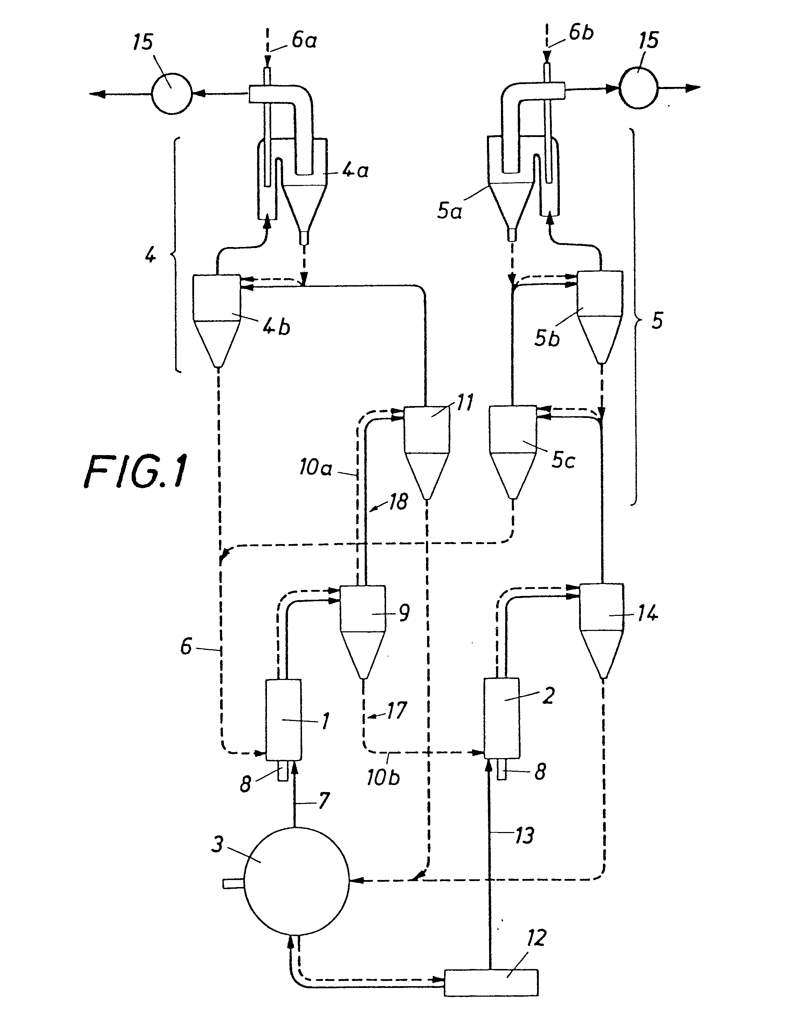

Die in Fig. 1 dargestellte Anlage zum Herstellen von Zement besteht im wesentlichen aus einem mehrstufigen Wärmetauscher für das Rohmehl, das nach seiner Vorwärmung stufenweise in zwei Kalziniereinheiten 1 und 2 eines Kalzinators entsäuert wird, bevor es in einem Drehrohrofen 3 zu Zementklinker gebrannt wird. Der Wärmetauscher weist dabei in zwei Abgassträngen 4 und 5 zusammengefasste, aus Zyklonen bestehende Wärmetauschereinheiten 4a und 4b bzw. 5a, 5b und 5c auf, die jeweils mit einem Teilstrom 6a und 6b des Rohmehls beschickt werden, wobei die beiden Rohmehlströme 6a und 6b vor ihrem Eintritt in die bezüglich des Rohmehlstromes erste Kalziniereinheit 1 zu einem gemeinsamen Rohmehlstrom 6 zusammengefasst werden. In der Kalziniereinheit 1, die an die Abgasleitung 7 des Drehrohrofens 3 angeschlossen ist und über einen Brenner 8 mit zusätzlicher Wärme versorgt wird, wird das vorgewärmte Rohmehl in einer ersten Stufe in einem solchen Ausmass entsäuert, dass der feinkörnige Anteil des Rohmehls vollständig kalziniert ist, nicht aber der grobkörnigere Anteil. Das mit dem Abgasstrom, der zur Unterscheidung zum strichliert angedeuteten Rohmehlweg mit vollen Linien dargestellt ist, aus der Kalziniereinheit 1 ausgetragene Rohmehl wird in einem Grobkornabscheider 9 in zwei Teilströme 10a und 10b geteilt, wobei der aus dem Abgasstrom abgeschiedene Grobkornanteil 10b der Kalziniereinheit 2 zur Vervollständigung der Entsäuerung zugeführt wird. Der bereits entsäuerte, mit dem Abgasstrom aus dem Grobkornabscheider 9 ausgetragene, feinkörnigere Anteil 10a des Rohmehls wird zu einem Feinkornabscheider 11 geführt, von wo dieser Rohmehlanteil zum Brennen in den Ofen 3 gelangt. Der Abgasstrom aus dem Feinkornabscheider 11 wird zum Beheizen des Wärmetauscherstranges 4 benützt.

Zur vollständigen Entsäuerung des grobkörnigeren Anteiles 10b des Rohmehls wird die Kalziniereinheit 2 mit der warmen Abluft eines dem Ofen 3 nachgeschalteten Kühlers 12 über eine Abluftleitung 13 versorgt und über einen Brenner 8 zusätzlich erwärmt. Dem grobkörnigeren Rohmehlanteil wird folglich in einer zweiten Stufe die für seine vollständige Kalzinierung erforderliche Wärmemenge zugeführt, so dass der feinkörnigere Rohmehlanteil nicht unnötig zusammen mit dem Grobkornanteil erwärmt zu werden braucht.

Das in der Kalziniereinheit 2 entsäuerte Rohmehl mit einem gröberen Kornanteil wird nach der Trennung vom Abgasstrom aus der Kalziniereinheit 2 mit Hilfe eines Abscheiders 14 in den Ofen 3 gebracht. Der in der Kalziniereinheit 2 erwärmte Abgasstrom dient in analoger Weise zur Erwärmung des Wärmetauscherstranges 5. Ist ein grösserer Korngrössenbereich des Rohmehls gegeben, so kann die Kalzinierung auch in mehr als zwei Stufen durchgeführt werden, was eine bessere Anpassung der Brennstoffmengen an die jeweiligen Korngrössenanteile und damit eine weitere Einsparung an Brennstoff erlaubt.

Wegen der gezielten, auf die Korngrössenanteile des Rohmehls abgestimmten Wärmezufuhr zu den Kalziniereinheiten 1 und 2 ergeben sich auch geringere Abgastemperaturen, was sich für den thermischen Wirkungsgrad günstig auswirkt. Ausserdem können die Abgasgebläse 15 der Wärmetauscherstränge 4 und 5 für niedrigere Temperaturen ausgelegt werden.

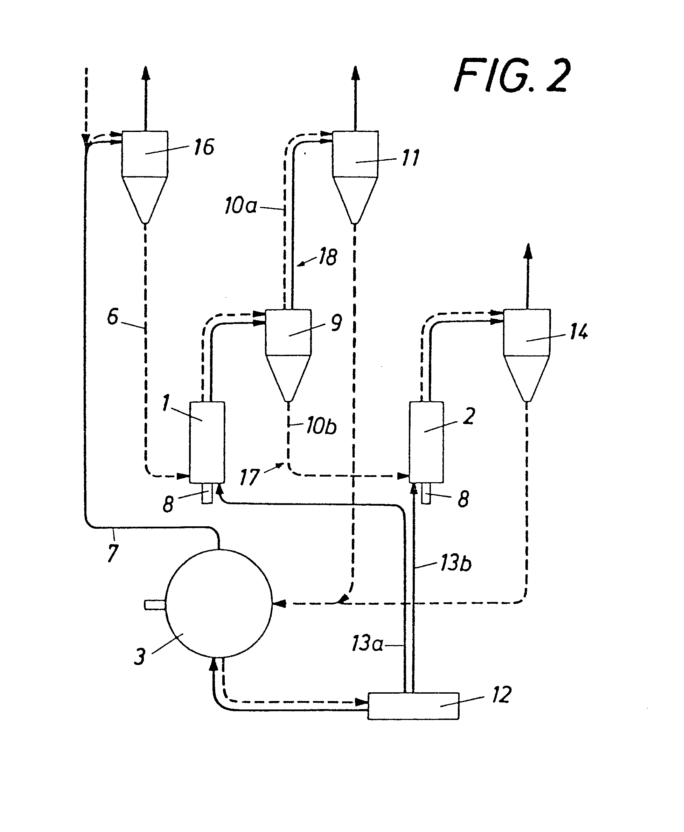

Zum Unterschied zum Ausführungsbeispiel nach Fig. 1 wird gemäss der Vorrichtung nach Fig. 2 die im Kühler 12 erwärmte Abluft über Leitungen 13a und 13b beiden Kalziniereinheiten 1 und 2 zugeführt, während die Abgasleitung 7 des Ofens 3 in die unterste Wärmetauschereinheit 16 eines nicht näher dargestellten, mehrstufigen Wärmetauschers mündet, in dem auch die Abgasströme aus den Kalziniereinheiten 1 und 2 zur Vorwärmung des Rohmehls Verwendung finden. Da es an sich für die stufenweise Kalzinierung in Abhängigkeit von der Korngrösse von untergeordneter Bedeutung ist, wie der Wärmetauscher aufgebaut ist, wurde in Fig. 2 von der näheren Darstellung des Wärmetauschers abgesehen.

Wegen der Führung der Ofenabgase unmittelbar in die unterste Wärmetauschereinheit 16 ist es möglich, das Ofenabgas unter die Abgastemperatur des Kalzinators 1 abzukühlen. Im Zusammenhang mit einer gegenüber Fig. 1 geringeren Abgasmenge aus der Kalziniereinheit 1 kann folglich eine geringere Abgasendtemperatur und damit eine bessere Wärmeausnützung erreicht werden. Die Abgas- und Rohmaterialführung zwischen der untersten Wärmetauschereinheit 16 und dem Ofen 3 bleibt an sich gleich. Die Austragungsleitung 17 des der Kalziniereinheit 1 nachgeschalteten Grobkornabscheiders 9 ist wieder mit der Kalziniereinheit 2 verbunden, während die Gasaustrittsleitung 18 mit einem Feinkornabscheider 11 in Verbindung steht. Der Rohmehlstrom aus der Kalziniereinheit 1 wird dementsprechend mit Hilfe des Grobkornabscheiders 9 in zwei Teilströme 10a und 10b geteilt, von denen der feinkörnigere Teilstrom dem Ofen 3 und der grobkörnigere Teilstrom 10b der Kalziniereinheit 2 zugeführt werden. Als Abscheider können Zyklonabscheider Verwendung finden. Wegen des geringeren Druckverlustes können aber auch Beruhigungskammern oder Umlenkabscheider für die Aufteilung des Rohmehlstromes eingesetzt werden.

## Patentansprüche

1. Verfahren zum Kalzinieren von Rohmehl, insbesondere für die Zementherstellung, bei dem das Rohmehl nach einer Vorwärmung unter Wärmezufuhr in wenigstens zwei Stufen kalziniert wird, bevor es in einem Ofen gebrannt wird, dadurch gekennzeichnet, dass nach der in Richtung des Rohmehlstromes ersten Kalzinierstufe vor jeder in Richtung des Rohmehlstromes folgenden Stufe ein jeweils feinkörnigerer Anteil des Rohmehls aus dem Rohmehlstrom abgeschieden und dem Ofen zugeführt wird.

2. Vorrichtung zur Durchführung des Verfahrens nach Anspruch 1, bestehend aus einem Kalzinator, einem im Abgasstrom aus dem Kalzinator angeordneten, mit einem Ofen verbundenen Abscheider für das kalzinierte Rohmehl und aus einem mit den Abgasen aus dem Kalzinator bzw. aus dem Ofen beheizten, mehrstufigen Wärmetauscher für das Rohmehl, wobei der Kalzinator wenigstens zwei durch einen Rohmehlabscheider miteinander verbundene Kalziniereinheiten aufweist, dadurch gekennzeichnet, dass der Rohmehlabscheider zwischen den Kalziniereinheiten (1, 2) als Grobkornabscheider (9) ausgebildet ist, dessen Austragungsleitung (17) mit der bezüglich des Rohmehlstromes nachgeordneten Kalziniereinheit (2) und dessen Gasaustrittsleitung (18) mit einem an den Ofen (3) angeschlossenen Feinkornabscheider (11) verbunden sind.

## Claims

1. A process of calcining ground raw material, particularly for making cement, in which the ground raw material is preheated and is then calcined in at least two stages with a supply of heat before it is burnt in a kiln, characterized in that a progressively more fine-grained portion of the ground raw material is separated from the stream of ground raw material after the first calcining stage in the direction of flow of the stream of raw material before said stream is supplied to each succeeding stage in the direction of flow of ground raw material and said separated portion is supplied to the kiln.

2. Apparatus for carrying out the process according to claim 1, consisting of a calcinator, a separator, which is disposed in the exhaust gas stream from the calcinator and connected to the kiln and serves to separate the calcined ground raw material, and a multi-stage heat exchanger, which is heated with the exhaust gases from the calcinator and/or the ground raw material and serves to heat the ground raw material, wherein the calcinator comprises at least two calcining units, which are interconnected by a separator for ground raw material, characterized in that the separator for ground raw material, which is connected between the calcining units (1, 2) consists of a coarser separator (9) and has a discharge line (17) connected to the calcining unit (2) succeeding in the direction of flow of the ground raw material and a gas exhaust line (18) connected to a fines separator (11), which is connected to the kiln (3).

## Revendications

1. Procédé de calcination de farine crue, en particulier pour la fabrication de ciment, dans lequel, après un préchauffage avec apport de chaleur, on calcine la farine crue en au moins deux étapes avant de la cuire dans un four, caractérisé par le fait qu'après la première étape de calcination dans le sens de l'écoulement de la farine crue, avant chaque étape suivante dans le sens d'écoulement de la farine brute, on sépare du courant de farine crue une fraction de la farine crue qui présente chaque fois un grain plus fin et on l'amène au four.

2. Appareil pour la mise en œuvre du procédé selon la revendication 1, composé d'un calcinateur, d'un séparateur de farine crue calcinée disposé dans le courant de gaz d'échappement venant du calcinateur et relié à un four, et d'un échangeur de chaleur à plusieurs étages destiné à la farine crue et chauffé par les gaz d'échappement venant du calcinateur ou du four, le calcinateur présentant au moins deux unités de calcination reliées entre elles par un séparateur de farine crue, caractérisé par le fait que le séparateur de farine crue, placé entre les unités de calcination (1, 2), est conçu sous forme de séparateur de grain grossier (9) dont le tuyau d'extraction (17) est relié à l'unité de calcination (2) placée à la suite relativement au courant de farine crue et dont le tuyau de sortie de gaz (18) est relié à un séparateur de grain fin (11) raccordé au four (3).

FIG.1

FIG. 2